# EUROPEAN PATENT SPECIFICATION

(11) **EP 1 908 705 B1**
(45) Date of publication and mention of the grant of the patent: **20.02.2013**
(21) Application number: 08150564.6
(22) Date of filing: 24.06.1999
(51) Int. Cl.: B65D 85/50, A23B 4/16, B65D 81/20, A23L 3/3418, A23B 4/00, A23B 4/18

(54) **Method for packaging alive bivalves**
Verfahren zum Verpacken von lebenden zweischaligen Weichtieren
Procédé pour emballer des bivalves vivants

(43) Date of publication of application: 09.04.2008
(62) Divisional of application: 99202050.3
(73) Proprietor: Keizer, Cornelis, 1944 KZ Beverwijk (NL)
(72) Inventor: Keizer, Cornelis, 1944 KZ Beverwijk (NL)
(74) Representative: Hatzmann, Martin

(56) References cited:
- EP-A- 0 471 611
- EP-A- 0 720 954
- EP-A- 0 880 899
- EP-A1- 0 965 271
- FR-A- 2 093 205
- FR-A- 2 755 432
- JP-A- 1 291 740
- JP-A- 58 060 935
- JP-A- 59 034 842
- JP-A- 59 173 043
- JP-A- 60 024 168
- NL-A- 9 800 005
- NL-C2- 1 001 054
- US-A- 2 563 364

## Description

The invention relates to a method for packaging alive bivalves according to the preamble of claim 1. Such methods are generally known from EP 0 720 954 A1 (Cornelis Keizer, 1996), EP 0 880 899 A1 (Jacobus Prins, 1998), JP-A-1 291740 (Sasaki Ryoji, 1988) and NL 9400652 (J.K. Vette and C.W. Vette, 1994).

It is known that the littoral zone, the coastal area with high and low tide, forms the common habitat conditions for bivalves. For bivalves, living high on the shore-line, low tide leads to a temporary exposure to air, which results in closure of the valves to prevent the animal from desiccation. On account of tight valve closure the oxygen supply is cut off and the bivalve is forced to generate its energy by anaerobic mechanisms (which is obtained by an adaptation of the classical E.M.P= Embden-Meyerhof-Parnas scheme).

In other words: bivalves are, depending on the prevailing conditions, able to adopt either an aerobic or an anaerobic metabolism, the latter being characterised by a decrease or lack of oxygen availability (anoxia). During anoxia an oxygen deficit is formed which is discharged at a later stage, with simultaneous secretion of metabolic by-products, once the aerobic metabolism is adopted again.

Bivalves may experience conditions which induce the anaerobic metabolism: in a natural way during low tide and exposure to ambient air or artificially during dry processing and/or packaging.

Even bivalves being exposed to wet conditions (immersed in water) may be artificially forced to isolate themselves from this wet environment and to adopt the anaerobic metabolism: by creating a threatening situation by for instance chemical and/or physical means or by exerting a sufficient force the valves will be tightly closed. The animal is brought in a clamped state, which prevents both the supply of oxygen-containing water to, and the discharge of water polluted with metabolic by-products from, the animal.

Furthermore it is known that energy consumption during anaerobic metabolism is far less than during aerobic metabolism. The anaerobic metabolism obviously means the start of the period ultimately leading to death, since the animal is not provided with food and oxygen from the outside environment any more. It will be evident that the aerobic metabolism in a wet environment, comparable with the natural aquatic habitat, only offers conditions to continue "normal" living.

However, time-until-death c.q. remaining shelflife for bivalves, in excellent biological conditions and kept in a dry environment thus in a state of anaerobic metabolism, can amount to some weeks and even two months. Time-until-death will, at the anaerobic metabolism, be shorter if the animal has lost the water commonly confined within the valve parts: the bivalve would desiccate and is unable to secrete metabolic by-products.

Moreover time-until-death of bivalves, having lost this water, and subsequently remaining in this fluid, will be shortened. Loosely packaging in a closed, airtight container or bag, resulting in a substantial drip loss will apart from accelerating the dieing process also facilitate growth of anaerobic bacteria. Both the fluid surrounding the bivalve, containing proteins and other components, as well as the dead bivalve itself will be an excellent medium for anaerobic spoilage which is encompassed with nasty smelling acidic off-odours and even more important the formation of toxic components being dangerous to human health.

EP 0 720 954 A1 (Keizer) discloses a method for packaging alive bivalves by forcing and keeping them in a clamped state while remaining in an essentially dry, oxygen-containing environment. The bivalves are forced to adopt the anaerobic metabolism due to which drip loss will be limited and shelflife be longer compared with loose packaging, and growth of anaerobic bacteria simultaneously is restricted due to the presence of oxygen.

According to this method a series of animals are introduced into a package and the animals are then pressed onto and against one another by means of at least a part of the package. The valve parts of each animal are closed against each other and are always kept closed in the package, the pressure within the package being kept substantially atmospheric, i.e. hardly positively or negatively differing from ambient pressure, or superatmospheric, i.e. well above ambient pressure and the animals being kept in contact with an oxygen-containing environment. According to one of the packaging means the desired force required for closing the shells may result from deformation of the package itself, for instance by reduction of the space available for the animals.

According to JP-A-1 291740 (Ryoji), which discloses a method in accordance with the preamble of claim 1, a number of alive bivalves are put in an airtight bag, after which the bag is vacuumed, to a pressure of about 50 to 500 Torr i.e. 0.3 to 0.9 bar below ambient pressure, and closed. The bivalves are, due to the forces exerted by the vacuumed bag, brought in a clamped state and cannot open the shell. The clamped state causes according to Ryoji the anaerobic metabolism as may be understood from the information provided above, bringing about prolongation of the life of bivalves.

Experiments with this known method show however results with a drastically decreasing time-until-death for bivalves exposed to air at vacuum conditions of more than about 0.3 bar below atmospheric pressure, i.c. at less than approximately 500 Torr.

Optimal prolongation of time-until-death thus requires a substantially atmospheric pressure. The pressure not necessarily has to be equal to, though may be slightly below ambient pressure. The larger the decrease in pressure below ambient pressure, the more resistance the animal has to offer in order to avoid being sucked out of its shell (the animal itself and/or the fluids confined within the shell), the more this will be at the expense of remaining time-until-death.
Superatmospheric pressures, even well above ambient pressure, did not show to be harmful to the animals.

NL 9400652 (Vette) also refers to substantially atmospheric pressures when describing packaging of alive bivalves completely immersed in (sea)water at vacuum conditions, i.e. at a subatmospheric pressure of preferably 0.98 bar. Characteristic of this prior art method is that packaging at just subatmospheric pressure is claimed as a last indissoluble step of a sequence of three subsequent steps: after cleaning, debyssing and further processing the bivalves have in a second step to be cooled and conditioned (to set the metabolism at rest) by immersion in salt water which is preferably provided with air or oxygen, before actual packaging preferably together with water in a closed container at a pressure just below ambient pressure.

EP 0 880 899 A1 (Prins) discloses a method for packaging alive shellfish or crustaceans in a hermetically closed (liquid-tight and gas-tight) container or flexible bag, which does not have the drawback of requiring large volumes. Living animals and both a protective gas atmosphere, for example consisting of extra O2 and CO2, and optionally water originating from the animals, are enclosed in a container. The addition of these gases is claimed to benefit the taste and the shelflife and to provide a preserving effect by inhibition of the growth of bacteria.

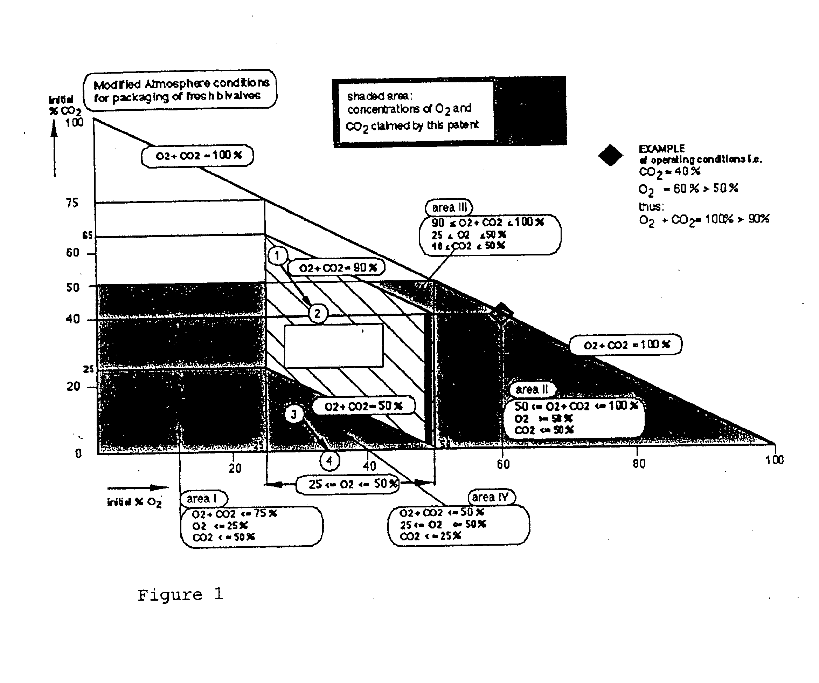

Further, subatmospheric pressure may prevail in the container. The quantity of O2 ought to amount in-between 25 and 50 %, whereas the sum of the quantities of O2 and CO2 ought to be in-between 50 and 90 %. From these data the quantity of CO2 can be calculated to amount in-between 25 and 65 % CO2 at the lowest level of 25 % oxygen, and in-between 0 and 40 % CO2 at the highest level of 50 % oxygen. In Figure 1 these claimed packaging conditions are depicted. It is remarked that the concentrations of O2 and CO2 change after sealing the package due to dissolution of CO2 by water or components similarly behaving with respect to dissolution. The concentration of CO2 decreases and as a result the concentration of O2 will increase. According to the claims the concentration of O2 will not exceed 50 % of the total content of gas in a container. Points 1 and 2 in Figure 1 respectively illustrate conditions at closing the package and some time after closing.

The preservative effect, referred to in EP 0 720 954 A1 (Keizer), deals with the prevention of the growth of anaerobic bacteria and is obtained by the presence of oxygen.
EP 0 880 899 A1 (Prins) also implicitely claims protection against aerobic decay, which obviously refers too to dead organic material being present in the package containing the living bivalves. From state of the art Modified Atmosphere Packaging (MAP) it is known that protection of dead products, as for instance meat, against spoilage at aerobic conditions is ascribed to CO2 as a main active component.
This preservative effect cannot be realised in the case of packaging alive bivalves as it is only obtained at restricted conditions with respect to the concentration of CO2 in the gas and certain headspace to amount of product ratios, which are not satisfied here.

In this known MAP the decrease in pressure which attends dissolution of CO2 after having closed a package, is commonly considered as a drawback because of the risk of pack collapse and squeezing of the product.

Application of CO2, especially to force the bivalves in a clamped state, will however be accompanied by negative effects on time-until-death just because the clamped state is obtained by dissolution of CO2 in the "water" fraction available within the package.
The "water" fraction may be considered to consist of the water confined by and/or attached to the animals and/or water lost by the animals (drip), as well as the soft, edible part (c.q. flesh, meat, tissue) of the animals, which itself consists for the larger part of water.

The benefits of Modified Atmosphere Packaging of alive bivalves with application of CO2 as a main component will be restricted to prevention of aerobic spoilage of proteins, etc. being present in the drip loss and/or of bivalves that are already unwantedly dead. The eventual occurrence of either aerobic or anaerobic spoilage outside the tightly clamped, still living bivalves does not effect these animals as will be dealt with below.

EP 0 880 899 A1 (Prins) optionally mentions enclosure in the package of water originating from the animals, i.e. water attached to and/or confined by the animals. It is remarked here that if no attached water would be enclosed in the package that the CO2 would be dissolved by the animals themselves and cause instantaneous death.
In actual practice there will always be some water confined by and/or attached to the bivalves. As the package initially will be at atmospheric pressure and not yet be sufficiently tight, as required according to EP 0 720 954 A1 (Keizer), there will be some leakage of water confined by the bivalves even when in a clamped state. This drip loss and water attached to the animals will absorb CO2 and cause a pressure reduction in the package which than finally yields a sufficiently tight packaging to prevent further drip loss. Our experiments showed that the bivalve is not able to hermetically close its shells (valve parts) with respect to gases and to maintain atmospheric pressure within the shells when the pressure outside the shells, i.c. in the package, is lower. The pressure within the shells will become equal to the pressure in the package which will lead to some additional loss of water first confined by the animal. Correspondingly one can conclude that though CO2 may avoid the development of an ammonia-odour it is primarily applied to force the bivalves to adopt the anaerobic metabolism by bringing the bivalves in the clamped state by sufficiently tight packaging fully in accordance with EP 0 720 954 A1 (Keizer). Extension of time-until-death according to EP 0 880 899 A1 (Prins), i.c. by application of CO2 to obtain a sufficiently tight package, may be comparable with the results according to EP 0 720 954 A1 (Keizer), provided that the concentration of CO2 is kept below 50 % (less than claimed by EP 0 880 899 A1) for bivalves being in a good condition. Bivalves with a poor biological condition, for instance at the end of the harvesting season, show increased drip losses due to which the pressure in the package will decrease to values at which time-until-death will be shortened instead of being extended. In order to avoid this the concentration of CO2 has to be substantially decreased to a level of 30 to 40 %.

Application of CO2, to force the bivalves in the clamped state, will inevitably thus always induce drip losses which can be considered as a main drawback.

A further drawback of packaging alive bivalves at atmospheric pressure or at just below ambient pressure, due to exposure to CO2, is that the finally resulting pressure in the package depends on i.a. the temperature of the bivalves and the ratio between the amount of water in, and the headspace volume of, the package.
The volume ought to be as small as possible i.e. just enough to contain the animals. If the volume would be larger more CO2 not only has to be added but also to be dissolved by the "water" fraction in order to reduce the volume i.e. to force the animals to close their valves. The larger volume i.e. a larger amount of CO2 would also result in an increased concentration of CO2 in the "water" fraction which will dramatically decrease time-until-death.

Throughout the year (harvesting season) the ratio between the mass of the meat and total mass of the animal, as well as the total mass-to-volume ratio of the animal and the water contents in the meat, show large variations. Within a lot of the animals there is a likewise variation in the latter ratio. The finally resulting pressure in the package, which is both determined by the amounts of water and CO2 in the package and which are difficultly to be controlled, may consequently considerably vary. Correspondingly the quality of the living bivalves, i.e. time-until-death and the amount of drip which is lost, may considerably vary which may be considered to be a drawback.

The objects of this invention involve the decrease of the costs of packaging alive bivalves and increased control and/or improval of their quality. As stated before bivalves are, depending on the prevailing conditions, able to adopt either an aerobic or an anaerobic metabolism, the latter not being characterised by a lack of oxygen as such though by the inability of the animals to make the oxygen available for maintaining the aerobic metabolism.

Surprisingly bivalves exposed to oxygen or ambient air, thus aerobic conditions, or to other gases, either at atmospheric or superatmospheric or vacuum conditions, live by definition according to the anaerobic metabolism. The animals can only take up oxygen dissolved in a liquid i.c. in water (wet environment). Bivalves exposed to an aerobic gaseous environment cannot take up oxygen being in a gaseous state (dry environment) and correspondingly adopt an anaerobic metabolism in spite of the fact that oxygen is available. Our experiments showed exactly the same time-until-death for initially alive bivalves when stored at atmospheric pressure in either pure oxygen (100 % 02) or in pure nitrogen (100 % N2). This affirms that, in spite of exposure of living bivalves to an aerobic atmosphere (pure oxygen), the animals adopt an anaerobic metabolism. Furthermore it is remarked that crustaceae are only able to live according to the aerobic metabolism i.c. are only able to stay alive in water containing sufficient oxygen.

With respect to delivering alive products with an increased time-until-death to the consumer the presence of CO2 may be considered to be irrelevant and easily yield the opposite effect. Our experiments revealed that exposure of living bivalves to CO2 concentrations exceeding 50 % resulted in a drastical reduction of time-until-death for animals being in a clamped state, whereas gaping animals, i.e. with their shells opened, even instantaneously died. It could be concluded that the bivalve is not able, even in the clamped state, to close its valves tight enough to prevent penetration of CO2 throughout the sealing of the shells.

Moreover drip losses, i.e. the loss of water initially confined by the shells, substantially increased due to the presence of CO2.

NL9800005 discloses a package comprising live mussels, in which package a sub atmospheric pressure may prevail or is made of shrink foil. Together with the mussels an amount of isotonic water is present within the package, the water corresponding substantially with the osmotic pressure of the living mussels. No gas is disclosed in this document as packaged with the mussels.

The objects of this invention relate to a conscious application of the distinction between the 2 types of metabolism and to impose the corresponding conditions to force the animals to adopt either the aerobic or the anaerobic metabolism. The invention is defined by appended claim 1.

According to the first object the quality of fresh, alive bivalves, packaged in a gas-tight and liquid-tight container, bag or similar package, can be maintained at not only a higher level but moreover at a more constant level than according to prior art.

Preferably the animals are forced to close their valves and to adopt the anaerobic metabolism before actual packaging. This can be realised by imposing the animals to a gaseous atmosphere while simultaneously creating a threatening effect, for instance by touching the animals or by movements during transport to the packaging machine. The bivalves are subsequently packaged in air or in a Modified Atmosphere according to the method according to the invention which is characterised by the creation of a subatmospheric pressure in the package which is, at least initially at packaging, not less than 30000 Pa (0.3 bar) and preferably not less than 10000 Pa (0.1 bar) below the atmospheric pressure. Depending on the flexibility c.q. rigidity of the package this will, due to the difference between ambient pressure and the pressure within the package which exists after having closed the package, cause a certain deformation of the package which brings or maintains the bivalves in the clamped state, enabling continuation of the anaerobic metabolism, at a pressure in between the pressure at packaging and atmospheric pressure.

The gas composition in the package ought to consist of at least an amount of oxygen, i.e. the gas may be just ambient air or may be a Modified Atmosphere containing preferably, though not necessarily, more than 50 % oxygen to even better prevent anaerobic bacterial spoilage of dead organic material being present in the container.

To realise this object of the invention the bivalves are, according to a first method, brought into a chamber containing a gas meeting with the conditions related to pressure and composition as described just before, i.e. at subatmospheric pressure and containing at least an amount of oxygen.

Furthermore the chamber comprises any known type of packaging machine, for instance any horizontal or vertical FFS (Form-Fill-Seal) machine. The packaging machine not necessarily has to be a dedicated machine, i.e. a costly MAP machine.

After liquid-tight and gas-tight packaging of the bivalves in this chamber the package may be discharged from the chamber and be exposed to ambient pressure.

According to a second method any known type of vacuum-packaging machine, not necessarily a dedicated MAP machine, may be used to evacuate part of the ambient air present in the package, thus to create a subatmospheric pressure as described here before.

In order to realise a better prevention against anaerobic decay a higher concentration of oxygen may be imposed by either placing the vacuum-packaging machine in a chamber, which contains a higher level of oxygen than air and/or by flushing the package with bivalves with a gas being rich in oxygen before creating a subatmospheric pressure. Obviously the latter conditions, i.c. a package with a high concentration of oxygen at a subatmospheric pressure, can be optionally imposed, though in a less cost-effective way, by application of a dedicated, state of the art, MAP machine. According to this method the package is vacuumed first and subsequently the gas is accurately inserted at exactly the desired composition at subatmospheric pressure, which may be considered as an advantage. Before the Modified Atmosphere gases can be inserted the package first has to be vacuumed at a rather low pressure.

It is remarked that the subatmospheric pressure in both above methods is imposed during packaging and that this pressure remains constant at the pre-set value. This is different from the development of a reduced pressure, due to dissolution of enclosed CO2, after having closed a package. Moreover, dissolution of CO2 is affected by a variety of parameters thus difficult to be controlled and may easily result in a variation of the subatmospheric pressure and may consequently cause an increase of drip losses and a reduction of time-until-death.

Alternatively, in the above-mentioned methods, the gas completely or partially consisting of O2 may be provided with an additional amount of CO2 not exceeding 50 %. Though both above methods normally suffice to realise the first object, this option applying an amount of CO2, preferably only traces of CO2, may offer the best prospects for practical application. After having closed the package the packaging material will stretch out due to the forces acting on the material and the animals will re-allocate. These effects may create pseudo-void volumes and correspondingly the forces exerted on the animals may decrease. Including a small amount of CO2 will be accompanied by dissolution in the "water" fraction and simultaneous decrease the volume of the package. The amount of CO2 to be included in the package should be sufficient to compensate for the pseudo-voids, arising after packaging. As a result the forces on the animals will be kept large enough to continue the clamped state of the animals.

Fig. 1 discloses O2 and CO2 concentrations in a method according to the present invention.

The composition of the gaseous atmospheres in the packages, to be imposed according to said methods, either or not optionally applying CO2, can be kept restricted to only O2 and CO2. The amounts of O2 and CO2 gas in the headspace may respectively be, either less than 25 % and less than 50 % (depicted in Fig. 1 as area I), or more than 50 % and less than 50 % (area II).

Furthermore, concentrations of O2 in between 25 % and 50 % and additionally an amount of CO2 being less than 25 % (area IV) or being inbetween 40 % and 50 % (area III) also suffice the requirements to realise the object of this invention.

The sum of the amounts of O2 and CO2 not necessarily has to be equal to 100 %. Part of the gas may exist of inert gases, for instance as a result of nitrogen unintendedly invading from the ambient environment or as a result of an incomplete removal of nitrogen due to inadequate flushing before closing the package.

Instead of O2 one may prefer to apply ozone O3 or a combination of O2 and O3 to prevent growth of anaerobic bacteria.

Instead of CO2 one may prefer to apply N2O since this component behaves similar as CO2 with respect to dissolution by water and because N2O is less acid than CO2 at comparable concentrations.

The percentages mentioned in this description are to be considered to be volume percentages.

Further, to obtain a more constant product, to extend time-until-death and to further reduce loss of water by the animal, an amount of water may be added in addition to the water confined by and/or attached to the animals to prevent or decrease dissolution of CO2 by the water confined by the animal or by the animal itself, thus preventing decrease of pH. Instead of adding only water when applying CO2 in packaging the bivalves, the water preferably is provided with an amount of lime, i.e. CaO or preferably Ca(OH)2 or similarly active chemical, to absorb the CO2 and/or to irreversibly react with the CO2 in order to prevent dissolution of CO2 by the water fractions or by the animal. As all or nearly all CO2 will react with the lime no gaseous CO2 will be present in the gas after closing the container and having obtained equilibrium conditions. Only a minor amount of CO2 will be required to realise the desired subatmospheric pressure. Just by way of example: if the initial composition of the gas consists of 10 % CO2, 30 % O2 and 60 % N2 then the final composition, at equilibrium, will be 33.3 % O2 and 66.7 % N2, whereas the pressure will be 10000 Pa (0.1 bar) below the atmospheric pressure. Points 3 and 4 in Fig.1 illustrate these conditions during and after packaging. Alternatively instead of separately inserting lime or an equivalent reactant in the container the bivalves may before packaging be exposed, by spraying or dipping, to water containing a small amount of lime. Packaging itself will be more efficient but moreover the lime will act as a chemical threat and assist in keeping the bivalves in the clamped state without being harmful to the bivalves as is known from V.L. Loosanoff and J.B. Engle, US Dept. of the Interior, 1942. Furthermore, lime not being harmful to bivalves, offers a way to eliminate small animals which are attached to and living on the bivalves and which are for esthetical and commercial reasons unwanted.

A further object concerns processing before packaging of alive bivalves. After harvesting bivalves commonly are transported in a dry state by ship or by road, often over long distances requiring a period of one day or longer.

Before processing the bivalves may be stored for a certain time in their natural habitat to allow the animals to "recover from the stress" experienced during transport and to allow them to get rid of sand confined within the shells. After re-harvesting or after harvesting without subsequent storage the bivalves are landed ashore and stored, often in containers, to allow the animals to recover (again) and to (additionally) get rid of sand. The containers or suchlike are either filled and circulated with sea water, i.e. the animals remain at aquatic conditions or sea water is sprayed/sprinkled over the animals remaining in the container.

In case of spraying/sprinkling the bivalves with sea water the animals will hardly or not at all replenish the fluids confined by them before with sea water and will hardly or not at all adopt the aerobic metabolism, i.e. the animals adopt the anaerobic metabolism.

In case the bivalves remain in sea water this not necessarily means that they adopt the aerobic metabolism. Due to the discharge of sewage and/or due to tidal effects the sea water obtained from coastal areas may be easily polluted with organic matter and consequently this sea water may contain only low amounts of oxygen, especially in summertime with higher sea water temperatures. In warmer periods even off-shore clean sea water can/will contain only low amounts of oxygen. Exposure of bivalves, during transport or just before processing, to sea water with low amounts of oxygen will initially allow the animals to adopt the aerobic metabolism, though the lower the oxygen concentration the sooner the oxygen will be depleted and the animals will switch to the anaerobic metabolism. Exposure of bivalves to sea water therefore requires high oxygen concentrations to enable the animals to open their valves in order to discharge the oxygen deficit which has been formed during preliminary anaerobic metabolism, i.e. to "recover" from the stress they experienced, and to enable the animals to secrete metabolic by-products and sand confined within the shells as well as to replenish earlier lost water.

Obviously storage at dry conditions means that the bivalves adopt by definition the anaerobic metabolism. By for instance movements during transport the bivalves will loose fluids contained within the valves and care has to be taken to avoid that the animals will be immersed in these fluids low in oxygen, thus easily resulting in anaerobic deterioration with a harmful effect on time-until-death.

The innovative aspects of the further embodiments relate to periodically forcing the animals to abruptly adopt the aerobic metabolism and the anaerobic metabolism.
When switching from their aquatic habitat to exposure by a gaseous atmosphere, for instance after harvesting and subsequent storage at ambient air, the animals will adopt the anaerobic metabolism and after a while they will open their valves (gaping) and loose the fluids contained within the valves. By exposure to (sea-)water and simultaneously imposing a physical and/or a chemical threat, for instance by exposure to water containing CO2 or N2O or another chemical component, which is experienced by the animals as threatening though which not instantaneously leads to death, bivalves will very fast, compared with exposure to ambient air, close their valves and adopt the anaerobic metabolism with a low energy consumption. Moreover the bivalves also keep their valves closed, are not going to gape thus do not loose confined fluids, as long as the danger continues to exist.

After a certain period the water containing CO2, thus preventing aerobic bacterial growth when applied in adequate amounts, is replaced by preferably refrigerated sea water which is preferably saturated or even oversaturated with oxygen. The sea water is preferably refrigerated, since the lower the temperature the larger the amount of oxygen it can contain and the lower the energy expenditure of the animals will be.

Our experiments showed that the bivalves instantaneously open their valves, intensively take in water thereby changing to the aerobic metabolism. The animals take up oxygen to maintain the aerobic metabolism and to discharge the earlier formed oxygen deficit. Additionally the oxygen prevents anaerobic bacterial growth. The intensive intake of water is evidently accompanied by an equally intensive discharge of water polluted with metabolic by-products and which drags along sand being present in the animal and/or confined within the shells.

In a next step the bivalves can be exposed again to the threatening situation. This step actually concerns a repeat of the first step in a sequence of two steps. The animals immediately close the valves simultaneously locking in oxygen containing seawater.

Depending on the time required for storage during transport or for waiting to be processed this sequence may be repeated. Repeating this cycle will also be in favour of elimination of sand still remained behind in the animal or within the shells.

Moreover, the alternating conditions i.e. the frequently imposed threatening situation, will induce the animals, just as in their natural habitat, to find a less dangerous place and correspondingly the bivalves commonly attached to each other, by means of their byssus threads, will try to get released. Getting the bivalves individually available in this way may be considered as an important advantage. The commonly applied processing step to uncluster the bivalves, thereby really injuring the animals and decisively limiting time-until-death, may be partly or fully substituted by a method of releasing the animals by alternating exposure to threatening conditions.

Our experiments showed however that the periods in which the bivalves are exposed to sea water with abundant oxygen ought preferably not to be too long, since after a while the byssus threads of the animals will grow again and the bivalves will get attached to each other again. Growth of byssus threads increases with increasing velocities and oxygen concentrations of the water.

Furthermore it is remarked that in the first step of each cycle, i.e. the step in which the animals are forced to adopt the anaerobic metabolism due to exposure to for instance water containing CO2, the animals not necessarily have to remain during the whole step in this water. As soon as the animals have adopted the anaerobic metabolism and correspondingly will be in a clamped state the water can be drained i.e. the animals can be stored at dry conditions for instance in ambient air, provided that other means are applied to keep the animals in the clamped state in order to prevent loss of fluids confined within the shells. These means may be state of the art and may be similar to those described in EP 0 720 954 A1.

## Claims

1. A method for packaging one or more alive bivalves in an hermetically closed package together with a gas or gas mixture, creating a subatmospheric pressure within the package, wherein a sufficiently tight packaging is obtained as a result of the creation of the subatmospheric pressure within the package which forces the at least one animal either during or after packaging, due to deformation of the package, in a clamped state and correspondingly to adopt an anaerobic metabolism, **characterised by** the creation of a subatmospheric pressure in the package which is, at least initially at packaging, not less than 30 000 Pa (0,3 bar) and preferably not less than 10 000 Pa (0,1 bar) below the atmospheric pressure.

2. A method according to claim 1, using a gas mixture containing an amount of less than approximately 25% 02 and an amount of less than approximately 50% CO2.

3. A method according to claim 1, using a gas mixture containing an amount of more than approximately 50% 02 and an amount of less than approximately 50% CO2.

4. A method according to claim 1, using a gas mixture containing an amount of 02 in between approximately 40% and 50% and an amount of CO2 in between approximately 40 % and 50% and an amount of a balance gas of less than approximately 10%.

5. A method according to claim 1, using a gas mixture containing an amount of 02 in between approximately 25 and 50% and an amount of less than approximately 25% CO2, wherein an amount of balance gas exceeds approximately 50 %.

6. A method of according to any one of claims 1- 5, in which the bivalves are provided with either an extra amount of water or an amount of lime or similarly reacting chemical before and/or during packaging.

7. A method according to any one of claims 1 or 6 using a gas or a mixture of gases with a composition according to any one of claims 2-5 and a chamber at subatmospheric pressure in which a container, bag or similar package, comprising alive bivalves is provided, which package is hermetically sealed within said chamber by means of a packaging machine within said chamber, wherein the package is subsequently discharged form said chamber.

8. A method according to any one of claims 1-7, wherein a vacuum packaging machine is placed in ambient atmosphere, which vacuum packaging machine creates a subatmospheric pressure in the package by evacuating part of the air and subsequently hermetically closing the package.

9. A method according to any one of claims 1-8, wherein a vacuum packaging machine is placed in ambient atmosphere which first flushes a package with a gas or gas mixture according to any one of claims 2-5 and subsequently creating a subatmospheric pressure in the package by evacuating part of the gas mixture and subsequently hermetically closing the package.

10. A method according to any one of claims 1 - 9, wherein a packaging machine is placed in a chamber containing a gas or gas mixture according to any of claims 2-5 which creates a subatmospheric pressure in the package present in said chamber by evacuating part of the gas mixture and subsequently hermetically closing the package.

11. A method according to any one of claims 1- 10, wherein a machine is used for first partly or completely evacuating ambient air from the package containing live bivalves subsequently inserting a gas or gas mixture with a composing according to any one of claims 2-5 while creating a subatmospheric pressure within said package and subsequently hermetically sealing the package.

12. A method according to anyone of the preceding claims which is not restricted to any number and/or any species of bivalves, and may for example range from one oyster to huge amounts of mussels, clams or cockles.

## Patentansprüche

1. Verfahren zum Verpacken von einem oder mehreren lebenden zweischaligen Weichtieren in einer hermetisch verschlossenen Verpackung zusammen mit einem Gas oder Gasgemisch, sodass in der Verpackung ein subatmosphärischer Druck entsteht, wobei man durch die Erzeugung des subatmosphärischen Drucks in der Verpackung eine ausreichend dichte Verpackung erhält, sodass das mindestens eine Tier entweder während oder nach dem Verpacken aufgrund der Deformation der Verpackung in einen geklemmten Zustand gezwungen wird und infolgedessen einen anaeroben Metabolismus annehmen muss, **gekennzeichnet durch** die Erzeugung eines subatmosphärischen Drucks in der Verpackung, der zumindest bei Beginn des Verpackens nicht weniger als 30000 Pa (0,3 Bar) und vorzugsweise nicht weniger als 10000 Pa (0,1 Bar) unter dem atmosphärischen Druck beträgt.

2. Verfahren nach Anspruch 1, unter Verwendung eines Gasgemischs, das eine Menge von weniger als ungefähr 25 % 02 und eine Menge von weniger als ungefähr 50 % CO2 enthält.

3. Verfahren nach Anspruch 1, unter Verwendung eines Gasgemischs, das eine Menge von mehr als ungefähr 50 % 02 und eine Menge von weniger als ungefähr 50 % CO2 enthält.

4. Verfahren nach Anspruch 1, unter Verwendung eines Gasgemischs, das eine Menge 02 zwischen ungefähr 40 % und 50 % und eine Menge CO2 zwischen ungefähr 40 % und 50 % und eine Menge Ausgleichsgas von weniger als ungefähr 10 % enthält.

5. Verfahren nach Anspruch 1, unter Verwendung eines Gasgemischs, das eine Menge 02 zwischen ungefähr 25 % und 50 % und eine Menge von weniger als ungefähr 25 % CO2 enthält, wobei eine Menge Ausgleichsgas ungefähr 50 % überschreitet.

6. Verfahren nach einem der Ansprüche 1-5, wobei die zweischaligen Weichtiere vor und/oder während dem Verpacken mit entweder einer extra Menge Wasser oder einer Menge Kalk oder einer ähnlich reagierenden Chemikalie versehen werden.

7. Verfahren nach einem der Ansprüche 1 oder 6, unter Verwendung eines Gases oder eines Gasgemischs mit einer Zusammensetzung nach einem der Ansprüche 2-5 und einer Kammer bei subatmosphärischem Druck, in welchem ein Behälter, ein Beutel oder eine ähnliche Verpackung, der bzw. die lebende zweischalige Weichtiere enthält, bereitgestellt wird, welche Verpackung innerhalb der Kammer mithilfe einer Verpackungsmaschine in der Kammer hermetisch abgedichtet wird, wobei die Verpackung anschließend aus der Kammer entfernt wird.

8. Verfahren nach einem der Ansprüche 1-7, wobei eine Vakuumverpackungsmaschine in Umgebungsluft platziert wird, welche Vakuumverpackungsmaschine durch Evakuieren eines Teils der Luft einen subatmosphärischen Druck in der Verpackung erzeugt und anschließend die Verpackung hermetisch verschließt.

9. Verfahren nach einem der Ansprüche 1-8, wobei eine Vakuumverpackungsmaschine in Umgebungsluft platziert wird, die zuerst eine Verpackung mit einem Gas oder einem Gasgemisch nach einem der Ansprüche 2-5 flutet und anschließend durch Evakuieren eines Teils des Gasgemischs einen subatmosphärischer Druck in der Verpackung erzeugt und dann die Verpackung hermetisch verschließt.

10. Verfahren nach einem der Ansprüche 1-9, wobei eine Verpackungsmaschine in einer Kammer mit einem Gas oder Gasgemisch nach einem der Ansprüche 2-5 platziert wird, die durch Evakuieren eines Teils des Gasgemischs einen subatmosphärischen Druck in der in der Kammer vorhandenen Verpackung erzeugt und dann die Verpackung hermetisch verschließt.

11. Verfahren nach einem der Ansprüche 1 - 10, wobei eine Maschine verwendet wird, um zuerst die Umgebungsluft teilweise oder vollständig aus der Verpackung, die lebende zweischalige Weichtiere enthält, zu evakuieren, anschließend ein Gas oder ein Gasgemisch mit einer Zusammensetzung nach einem der Ansprüche 2-5 einzuführen, während gleichzeitig ein subatmosphärischer Druck in der Verpackung erzeugt wird, und dann die Verpackung hermetisch zu verschließen.

12. Verfahren nach einem der vorhergehenden Ansprüche, das nicht auf eine Anzahl und/oder eine Spezies zweischaliger Weichtiere beschränkt ist, und das beispielsweise von einer Auster bis zu einer großen Anzahl von Miesmuscheln, Sandmuscheln oder Herzmuscheln reichen kann.

## Revendications

1. Procédé pour emballer un ou plusieurs bivalves vivants dans un emballage fermé hermétiquement avec un gaz ou un mélange de gaz, créant une pression subatmosphérique dans l'emballage, dans lequel un emballage suffisamment serré est obtenu en conséquence de la création de la pression subatmosphérique dans l'emballage qui force ledit au moins un animal, soit pendant, soit après l'emballage, du fait de la déformation de l'emballage, dans un état serré et à adopter en conséquence un métabolisme anaérobique, **caractérisé par** la création d'une pression subatmosphérique dans l'emballage qui n'est pas, au moins initialement lors de l'emballage, inférieure à 30.000 Pa (0,3 bar) et de préférence pas inférieure à 10.000 Pa (0,1 bar) au-dessous de la pression atmosphérique.

2. Procédé selon la revendication 1, utilisant un mélange de gaz contenant une quantité inférieure à environ 25 % d'O₂ et une quantité inférieure à environ 50 % de CO₂.

3. Procédé selon la revendication 1, utilisant un mélange de gaz contenant une quantité supérieure à environ 50 % d'O₂ et une quantité inférieure à environ 50% de CO₂.

4. Procédé selon la revendication 1, utilisant un mélange de gaz contenant une quantité d'O₂ entre environ 40 % et 50 % et une quantité de CO₂ entre environ 40 % et 50 % et une quantité d'un gaz restant inférieure à environ 10 %.

5. Procédé selon la revendication 1, utilisant un mélange de gaz contenant une quantité d'O₂ entre environ 25 et 50 % et une quantité inférieure à environ 25 % de CO₂, dans lequel une quantité de gaz restant dépasse environ 50 %.

6. Procédé selon l'une quelconque des revendications 1 à 5, dans lequel les bivalves reçoivent soit une quantité supplémentaire d'eau, soit une quantité de chaux ou d'un produit chimique réagissant de manière similaire avant et/ou pendant l'emballage.

7. Procédé selon l'une quelconque des revendications 1 et 6, utilisant un gaz ou un mélange de gaz avec une composition selon l'une quelconque des revendications 2 à 5 et une chambre à une pression subatmosphérique dans laquelle un récipient, un sac ou un emballage similaire, comprenant des bivalves vivants est fourni, lequel emballage est fermé hermétiquement dans ladite chambre au moyen d'une machine d'emballage dans ladite chambre, dans lequel l'emballage est ensuite déchargé de ladite chambre.

8. Procédé selon l'une quelconque des revendications 1 à 7, dans lequel une machine d'emballage sous vide est placée dans une atmosphère ambiante, laquelle machine d'emballage sous vide crée une pression subatmosphérique dans l'emballage en évacuant une partie de l'air et en fermant hermétiquement ensuite l'emballage.

9. Procédé selon l'une quelconque des revendications 1 à 8, dans lequel une machine d'emballage sous vide est placée dans une atmosphère ambiante, laquelle remplit d'abord un emballage d'un gaz ou d'un mélange de gaz selon l'une quelconque des revendications 2 à 5 et crée ensuite une pression subatmosphérique dans l'emballage en évacuant une partie du mélange de gaz et en fermant ensuite hermétiquement l'emballage.

10. Procédé selon l'une quelconque des revendications 1 à 9, dans lequel une machine d'emballage est placée dans une chambre contenant un gaz ou un mélange de gaz selon l'une quelconque des revendications 2 à 5, laquelle crée une pression subatmosphérique dans l'emballage présent dans ladite chambre en évacuant une partie du mélange de gaz et en fermant ensuite hermétiquement l'emballage.

11. Procédé selon l'une quelconque des revendications 1 à 10, dans lequel une machine est utilisée pour, d'abord, évacuer partiellement ou complètement l'air ambiant de l'emballage contenant des bivalves vivants, insérer ensuite un gaz ou un mélange de gaz avec une composition selon l'une quelconque des revendications 2 à 5 tout en créant une pression subatmosphérique dans ledit emballage, et fermer ensuite hermétiquement l'emballage.

12. Procédé selon l'une quelconque des revendications précédentes, qui n'est pas limité à un nombre quelconque et/ou à des espèces quelconques de bivalves, et qui peut, par exemple, aller d'une huître à d'énormes quantités de moules, de palourdes ou de coques.
